# EUROPEAN PATENT APPLICATION

(11) **EP 3 252 095 A1**
(43) Date of publication of application: **06.12.2017**
(21) Application number: 16171865.5
(22) Date of filing: 30.05.2016
(51) Int. Cl.: C08K 5/16

(54) **POLYOLEFIN FOAM COMPOSITION**

(71) Applicant: SABIC Global Technologies B.V., 4612 PX Bergen op Zoom (NL)
(72) Inventor: VAN DER VEN, Emanuel Joseph Herman Marie, 6160 GA Geleen (NL); KRIST, Johan Maria, 6160 GA Geleen (NL); VACHON, Jerome, 6160 GA Geleen (NL); VAN DER MEER, Douwe Wiebe, 6160 GA Geleen (NL); DOHMEN, Maurice Nicolaas Maria, 6160 GA Geleen (NL)
(74) Representative: Sabic Intellectual Property Group

(57) **Abstract**

The present invention is directed to a polyolefin resin composition comprising polyolefin and a mixture comprising glycerol ester, primary aliphatic amide and secondary aliphatic amide.

The invention relates to a polyolefin foam composition obtained by foaming said polyolefin resin composition in a physical foaming process in the presence of a physical blowing agent.

## Description

The invention relates to polyolefin foam composition and a fast degassing process after a polyolefin foam process.

Polyolefin foam may be produced via a chemical blowing process or via a physically blowing process. An important polyolefin foam is physically blown polyethylene foam which is commonly produced with blowing agents for example isobutane, pentane and cyclopentane. After the production via a continuous extrusion process, immediately a slow gas exchange will take place between these gasses and air. This process takes, depending on the circumstances like for instance curing temperature, several days, up-to several weeks. Only after a certain period of time which may range between 5 days till 3 weeks, when the gas exchange has come to an acceptable level, these foamed products can be supplied to customers or be handled in further production processes.

Polyethylene foams are described in Ullmann's Encyclopedia "Foamed Plastics" by Heinz Weber et al. (2002; Wiley VCH Verlag). These foams are classified as low density and high density foams. These foams may be non-crosslinked or crosslinked foams. Most polyolefin foams and most polyethylene foams are made from low density polyethylene (LDPE).

Foam based on low density polyethylene can be shaped in different semifinished products such as for example sheets, rods, profiles and tubes. The expansion of LDPE results in a material with a substantially reduced density. LDPE applied as the raw material for the foam has a specific density of for example about 915-935 kg/m³ and next the average density of PE foam is for example about 15-300 kg/m³. In addition to the weight that is changed during the foam process also other properties that are gained by the PE in its foamed state are jointly responsible for the many applications of the obtained foam.

LDPE foam can be produced for example through extrusion technology. In this process the physical blowing agent is injected directly into the PE melt under pressure and homogeneously dissolved and mixed in the molten polyethylene. A minimum pressure, which depends on the blowing agent used and the prevailing melt temperature, is needed to keep the blowing agent dissolved in the PE melt. This pressure needs to be maintained through to the extruder in order to prevent the blowing agent from expanding prematurely from the melt. On exiting from the die, the melt pressure decreases to the atmospheric pressure and the blowing agent expands immediately in the melt to form the foam.

Immediately after the production, a gas exchange will take place, i.e. the blowing agent is exchanged by air. This process is also known as degassing. This process depends on for example the thickness of the foam and the outside temperature, and will take between 5 days up to 3 weeks. This period may be even much longer for specific products or in case of for example co-extrusion sheets, very thick products or products on large rolls.

It is a disadvantage for the foam converter to have slow degassing because during this period the produced foamed article cannot be converted for instance by using a lamination step. Furthermore because of safety reasons it is not allowed to convert the flammable foamed article with heat involved. Another disadvantage is that transport of the flammable foamed article shortly after the production is hazardous due to the risk of explosion or fire.

The object of the present invention is to provide a polyolefin resin composition to be foamed with a physical foaming process in the presence of a physical blowing agent which results in fast degassing process of a foamed article after the polyolefin foam process.

The object is obtained by a polyolefin resin composition comprising
- polyolefin and
- a mixture comprising glycerol ester, primary aliphatic amide and secondary aliphatic amide.

The fast degassing is obtained by foaming the polyolefin resin composition according to the present invention in a physical foaming process in the presence of the physical blowing agent wherein the polyolefin resin composition comprises

According to a preferred embodiment of the invention the total amount of polyolefin in the polyolefin resin composition ranges between 90.0 % and 99.9 % by weight and the amount of the mixture in the polyolefin resin composition ranges between 0.1 % and 10.0 % by weight.

Preferably the amount of the mixture is at least 0.2 % by weight, more preferably at least 0.5 %, and even more preferably at least 1, 2, 3, or 5 % by weight relative to the amount of polyolefin and mixture.

Suitable physical blowing agents include hydrocarbon gasses such as iso-butane, n-butane, iso-pentane and n-pentane, propane, cyclopentane, LPG and/or a fluorohydrocarbon.

Preferably the physical blowing agent is iso-butane.

The polyolefin may be selected from for example low density polyethylene (LDPE), high density polyethylene (HDPE), linear low density polyethylene (C₄, C₆ and C₈ based LLDPE copolymers), ethylene vinyl acetate (EVA), ethylene methacrylic acid (EMA) and/or metallocene catalyst based polyethylene (mPE) , polyolefin plastomers, polyolefin elastomers, grafted LDPE , grafted LLDPE or polypropylene.

It is also possible to apply for example radiation or peroxide modified polyolefins.

Preferably the polyolefin is LDPE, LLDPE or HDPE.

According to a preferred embodiment of the invention the polyolefin is low density polyethylene (LDPE).

Preferably the glycerol ester is selected from glycerol-mono-ester, glycerol-di-ester and/or glycerol-tri-ester.

Suitable examples of glycerol-mono-ester include glycerol-mono-stearate (GMS) and/or glycerol-mono-palmitate (GMP).

Suitable examples of glycerol-di-ester include glycerol-di-stearate (GDS) and/or glycerol-di-palmitate (GDP).

Suitable examples of glycerol-tri-ester include glycerol-tri-stearate (GTS) and/or glycerol-tri-palmitate (GTP).

According to a preferred embodiment of the invention the primary aliphatic amide is selected from palmitamide and/or stearamide.

According to a preferred embodiment of the invention the secondary aliphatic amide is selected from the group consisting of N-substituted palmitamides.

A preferred N-substituted palmitamide is oleyl-palmitamide.

Generally, the weight ratio primary amide and secondary amide: glycerol ester ranges between 0.1:1 and 2.5:1.

Preferably, the weight ratio primary amide and secondary amide: glycerol ester ranges between 0.5:1 and 1.5:1.

According to a preferred embodiment of the invention the polyolefin resin composition comprises
- polyolefin and
- a mixture comprising glycerolester, oleyl-palmitamide and stearamide.

According to a further preferred embodiment of the invention the polyolefin resin composition comprises
- polyolefin and
- a mixture comprising glycerol-mono-ester, oleyl-palmitamide and stearamide.

According to another preferred embodiment of the invention the polyolefin resin composition comprises
- polyolefin and
- a mixture comprising glycerol-mono-stearate, oleyl-palmitamide and stearamide.

Preferably, the mixture comprises glycerol-mono-stearate in an amount wherein the weight ratio glycerol-mono-stearate: stearamide ranges between 1:1 and 10:1.

Preferably, the mixture comprises oleyl-palmitamide in an amount wherein the weight ratio oleyl-palmitamide: stearamide ranges between 1:1 and 5:1.

According to a preferred embodiment of the invention the polyolefin resin composition comprises
- polyolefin and
- a mixture comprising glycerol-mono-stearate, glycerol-mono-palmitate, oleylpalmitamide and stearamide.

According to a further preferred embodiment of the invention the polyolefin resin composition comprises
- polyolefin and
- a mixture comprising glycerol-mono-ester, glycerol-di-ester, glycerol-triester, oleyl-palmitamide and stearamide.

The mixture comprising glycerol-mono-ester, glycerol-di-ester and glycerol-tri-ester comprises more than 50 % by weight glycerol-mono-ester relative to the total amount of glycerolesters.

According to another preferred embodiment of the invention the polyolefin resin composition comprises
- polyolefin and
- a mixture comprising glycerol-mono-stearate, glycerol-mono-palmitate, glycerol-di-stearate , glycerol-di-palmitate , glycerol-tri-stearate, glycerol-tri-palmitate , oleyl-palmitamide and stearamide.

The components of the mixture can be added together by the polyolefin producer. Components of the mixture, for example the glycerol mono ester, may also be added separately by the foam producer to the polyolefin resin composition.

In all embodiments described before the preferred polyolefin is low density polyethylene (LDPE).

It is an advantage of the present invention that the result for fast degassing can be obtained for thin sheets and for thick sheets in a broad temperature range for foaming. Depending on the thickness and depending on the temperature a weight ratio between the components in the composition according to the invention may be selected.

The present composition can be applied in the production of sheets. The production of sheets may be divided in the production of thin sheets, for example in the range between 0.5 and 3 mm and in the production of thick sheets for example in the range between 3 and 25 mm. The present composition can also be applied for example in the production of blocks and foamed planks.

Furthermore with use of the composition according to the invention the desired degassing results are obtained in a very broad temperature range in which the foam is produced for example between 0 degrees Celcius and 50 degrees Celcius and preferably between 10 degrees Celcius and 40 degrees Celsius.

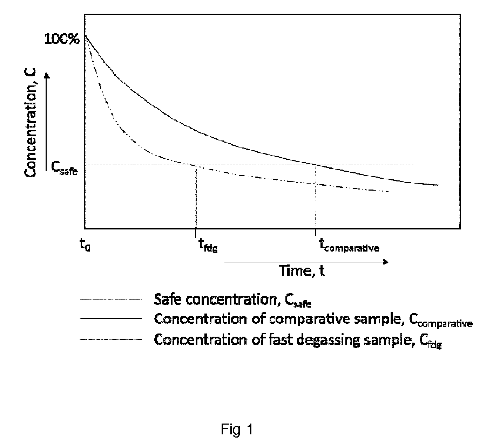

As elucidated in Fig 1 in the degassing process according to the invention the concentration of blowing agent in the sample exhibiting fast degassing as a function of time is defined as C_{fdg}(t).

The concentration of blowing agent in the comparative sample as a function of time is defined as C_{comparative}(t).

The comparative sample is the same in composition as the fast degassing sample according to the invention with the exception that the fast degassing sample according to the invention is directed to the mixture comprising glycerol ester and aliphatic amide and the comparative sample is directed to glycerol-mono-stearate (GMS).

Concentration is defined as the weight of blowing agent relative to the original weight amount of blowing agent at t₀. At to the concentration of the blowing agent is 100%. The comparative sample is produced with the same amount of blowing agent as the fast degassing sample C_{fdg}(t₀) = C_{comparative}(t₀). The time of degassing, t, is defined as time elapsed immediate after production of the foamed article, t₀.

The concentration of the foamed article when further converting and transport is safely possible is defined as C_{safe}. Converting and transport ( depending on the specific situation it can be that for converting and for transport different values are required) is safely possible in the case that at least 10 %, preferably at least 25 %, and more preferably at least 50 %, of the blowing agent is degassed. The time to reach this concentration C_{safe} is t_{fdg} for the fast degassing sample and t_{comparative} for the comparative sample, respectively (C_{fdg} (t_{fdg}) = Ccomparative(t_{comparative}) = Csafe).

The object to provide fast degassing process of a foamed article after the polyolefin foam process is achieved by a degassing process wherein 0.14< t_{fdg}/t_{comparative} < 1.0.

The invention is directed to a degassing process of a foamed article after a polyolefin foam process of foamed article characterised in that 0.14< t_{fdg}/t_{comparative} <1.00 wherein t_{fdg} and t_{comparative} are the times of the fast degassing sample and comparative sample, respectively, at which the concentration of the blowing agent is decreased to a concentration C_{safe} for both the fast degassing sample and comparative sample where further converting and transport is safely possible and wherein in the polyolefin foam process a polyolefin foam composition is obtained by foaming a polyolefin resin composition in a physical foaming process in the presence of the physical blowing agent.

The use of this polyolefin resin composition in the physical foaming process results in a ratio for t_{fdg}/t_{comparative} in the range between 0.14 and 1.00.

If t_{fdg} / t_{comparative} < 0.14 degassing will be too quick and results in severe shrinkage and irreversible dimensional changes of the foamed article. If t_{fdg} / t_{comparative} <0.14 collapse occurs.

According to a preferred embodiment of the invention the use of the polyolefin resin composition in the physical foaming process in the presence of the physical blowing agent results in a ratio t_{fdg}/t_{comparative} < 0.5.

According to a further preferred embodiment of the invention the use of this polyolefin resin composition in the physical foaming process in the presence of the physical blowing agent results in a ratio t_{fdg}/t_{comparative} < 0.3.

It is a main advantage of the present polyolefin resin composition that foam degasses fast and that producers can use for example their produced foams after 1-2 days in their conversion processes instead of after more than for example 5 days.

The use of this polyolefin resin composition in the physical foaming process in the presence of the physical blowing agent results in a reduction of more than 50 % by weight of physical blowing agent (relative to the original amount of blowing agent immediately after production of the foamed article) during a period of less than 120 hours, preferably less than 96 hours and more preferably less than 48 hours.

The concentration of the blowing agent in the foamed article was measured by monitoring the weight of the article for example a roll of product during a time period. At start the product is filled with isobutane and over time exchanged with air. Isobutane has a higher density (2, 44 kg/m³ at 25°C) than air (1, 18 kg/m³ at 25°C). By the measurement of the weight-loss of the product the isobutane degassing amount is directly calculated. Alternatively a method wherein foamed samples were collected in vials at various times (t) after production at time t₀ and closed hermetically can be performed. Foamed samples were melted inside the hermetically closed vials during a heating step at 140 degrees Celsius before the gas was collected and injected on a gas chromatograph. The sample were analyzed by headspace gas chromatography with FID (flame ionisation detector) detection on a Perkin Elmer. A standard of pentane was used for quantification, since the response on the FID is comparable with isobutane.

The use of the polyolefin resin composition in the physical foaming process in the presence of the physical blowing agent results in a lower end-concentration of the blowing agent.

The maximal reduction of physical blowing agent is a reduction of 100 % by weight of physical blowing agent.

Furthermore the use of the polyolefin resin composition according to the invention reduces the working stock because there is no need for work stock of between for example 5 days and 4 weeks which is important for the working capital of foam producing companies.

The use of GMS and/or stearamide to prevent foam from collapsing with dimensional change the first days after production is known. It is an additional advantage of the present invention that the amount of GMS may be reduced between for example 20-60% by weight.

The products obtained with the polyolefin resin according to the invention have been converted successfully 48 hours after production without collapse with dimensional change. The polyolefin resin composition according to the invention results in a process without blisters, without delamination and in fast degassing without dimensional change. This result is not obtained with only use of GMS and without the specific mixture according to the present invention.

The present invention has many advantages such as for example no deviations in processing were noticed on single screw foam extruder, twin screw foam extruder and tandem foam extruder.

Further advantages of the invention are the good produce ability, the excellent dimensional stability of the whole coil for, for example, 0.8 mm foam and the reduction of scrap ratio by 30% during production of foamed articles.

An additional advantage is that the conversion time for all foams is less dependent on external circumstances such as for example winter outside temperatures ( for example winter vs summer). A further advantage is the smaller warehouse needed and less foam stock, leading to less warehouse costs and more free working capital.

The preferred polyolefin is low density polyethylene (LDPE).

Suitable low density polyethylene LDPE has a melt flow rate (MFR) at 2.16 kg load and 190°C ranging between 0.1 and 30 g/10 min. Preferably MFR ranges between 0.2 and 5 g/10 min. More preferably MFR ranges between 1.5 and 3 g/10 min.

Generally the density of the LDPE ranges between 915 kg/m³ and 935 kg/m³. Preferably the density of the LDPE ranges between 921 kg/m³ and 935 kg/m³

LDPE homo or copolymers may be obtained by a tubular process, by an autoclave process or by a metallocene based process.

The polyolefin resin composition may additionally contain other additives such as for example flame retardants, pigments, lubricants, flow promoters, antistatic agents, processing stabilizers, long term stabilisers and/or UV stabilizers. Requirements for physical foaming of polyolefin compositions are disclosed in "How to choose a polyolefin grade for physical foaming "by Henk Ruinaart (Blowing agents and foaming processes 2005; Stuttgart Germany 10-11 May 2005).The physical foaming process of LDPE is disclosed for example in EP1308475 and EP2164893.

The foamed article may be produced for example in the shape of film, sheet, profile, rod, plank and tube. The foamed article may be used in or may be used as such for (floor, ceiling, wall, cold and/or hot water copper or plastic pipe) insulation, (protective) packaging, used in sport and leisure articles (e.g. swimming suits), for floatation and decoration purposes, for sound isolation and sound prevention. The foamed article may be used in lamination process with other foamed articles or film or sheet, or other non-foamed articles.

US 6156813 discloses a composition comprising a polyolefin, a blowing agent and a fatty acid N-aliphatic alcohol amide. US 6156813 relates to process additives for polyolefin products that can substantially reduce greasy deposits on substrates and, in foams, promotes an increased rate of escape of blowing agent from the cells as compared to GMS alone. The process additives are particularly useful for producing stable foams from carbon dioxide based blowing agents and reducing the aging time for these foams. The process additive comprises at least one fatty acid N-aliphatic alcohol amide. US 5750584 does not disclose a mixture comprising glycerol ester, primary aliphatic amide and secondary aliphatic amide.

US 5750584 discloses a composition comprising a polyolefin, and a stability control agent combination comprising a fatty acid with polyol such as GMS and N-substituted fatty acid amides such as N-stearyl stearamide, N-palmityl stearamide and N-palmityl palmitamide. The mixture as disclosed in US 5750584 does not contain a primary aliphatic amide. Only the mixture comprising glycerol ester, primary aliphatic amide and secondary aliphatic amide results in the fast degassing results as obtained with the present invention.

The invention will be elucidated by means of the following non-restrictive examples.

### Example I

### Production of LDPE composition to be foamed

99.45 % by weight LDPE (SABIC grade 2102TX00) were mixed at 180 degrees Celsius in compounder extruder at regular at 180 degrees Celsius with - 0.1 % by weight of a mixture consisting of glycerol-mono-stearate, glycerol-mono-palmitate, glycerol-di-stearate, glycerol-di-palmitate , glycerol-tri-stearate and glycerol-tri-palmitate (ATMER 122)
- 0.3 % by weight oleyl-palmitamide (CRODAMIDE 203) and
- 0.15 % by weight stearamide (CRODAMIDE S)

### Example II

### Foaming of the polyolefin resin composition according to Example I.

The polyolefin composition according to Example I is added to a physical foam extruder. The composition to be foamed comprises
- 87.1 % by weight of the composition according to Example I,
- 12 % by weight isobutane
- 0.5 % by weight talc and
- 0.4 % by weight of a glycerol-mono-stearate and glycerol-mono-palmitate mixture (ATMER 129),

The temperatures of the melting zones were set on a ramping profile starting at 160 degrees running up-to 180 degrees C. Cooling temperatures were set on 100 degrees C.

A sheet (6 mm thickness) with a density of 33 kg/m³ was produced.

After producing the foam at 20 degrees Celcius via the regular physical extrusion process with isobutane, a 50% reduction in concentration of isobutane was reached after 4.8 days, as measured by Gas Chromatography.

At a concentration of 50% isobutane the degassing time was 4.8 days (t_{fdg} = 4.8 days).

### Comparative Example A

### Production of LDPE composition to be foamed

98.0 % by weight LDPE (SABIC grade 2102TX00) were mixed at 180 degrees Celsius in compounder extruder at regular at 180 degrees Celsius with 2% ATMER 7300 (50% masterbatch of glycerol-mono-stearate and glycerol-mono-palmitate mixture in LDPE).

### Comparative Example B

### Foaming of the polyolefin resin composition according to Example A.

The polyolefin composition according to Example A is added to a physical foam extruder. The composition to be foamed comprises 89.5 % by weight of the composition according to Example A, 10 % by weight isobutane and 0.5 % by weight talc.

The temperatures of the melting zones were set on a ramping profile starting at 160 degrees running up-to 180 degrees C. Cooling temperatures were set on 100 degrees C.

A sheet (6 mm thickness) with a density of 33 kg/m³ was produced.

After producing the foam at 20 degrees Celcius via the regular physical extrusion process with isobutane, a 50% reduction in concentration of isobutane was reached after 17.2 days, as measured by Gas Chromatography.

At a concentration of 50% isobutane the degassing time was 17.2 days (t_{fdg} = 17.2 days).

### Example III

### Production of LDPE composition to be foamed

99.45 % by weight LDPE (SABIC grade 2102TX00) were mixed at 180 degrees Celsius in compounder extruder at regular at 180 degrees Celsius with
- 0.1 % by weight of a mixture consisting of glycerol-mono-stearate, glycerol-mono-palmitate, glycerol-di-stearate , glycerol-di-palmitate , glycerol-tri-stearate and glycerol-tri-palmitate, (ATMER 122)
- 0.3 % by weight oleyl-palmitamide (CRODAMIDE 203) and
- 0.15 % by weight stearamide (CRODAMIDE S).

### Example IV

### Foaming of the polyolefin resin composition according to Example III.

The polyolefin composition according to Example I is added to a physical foam extruder. The composition to be foamed comprises
- 86.1 % by weight of the composition according to Example III,
- 13 % by weight isobutane
- 0.5 % by weight talc and
- 0.4 % by weight of a glycerol-mono-stearate and glycerol-mono-palmitate mixture (ATMER 129).

The temperatures of the melting zones were set on a ramping profile starting at 160 degrees running up-to 180 degrees C. Cooling temperatures were set on 100 degrees C.

A sheet (2 mm thickness) with a density of 22 kg/m³ was produced.

After producing the foam at 10 degrees Celcius via the regular physical extrusion process with isobutane, a 50% reduction in concentration of isobutane was reached after 2.5 days, as measured by Gas Chromatography.

At a concentration of 50% isobutane the degassing time was 2.5 days (t_{fdg} = 2.5 days).

### Comparative Example C

### Production of LDPE composition to be foamed

99.1 % by weight LDPE (SABIC grade 2102TX00) were mixed at 180 degrees Celsius in compounder extruder at regular at 180 degrees Celsius with 0.9 % by weight by weight of a glycerol-mono-stearate and glycerol-mono-palmitate mixture ATMER 129.

### Comparative Example D

### Foaming of the polyolefin resin composition according to Example C.

The polyolefin composition according to Example C is added to a physical foam extruder. The composition to be foamed comprises 86.5 % by weight of the composition according to Example C, 13 % by weight isobutane and 0.5 % by weight talc.

The temperatures of the melting zones were set on a ramping profile starting at 160 degrees running up-to 180 degrees C. Cooling temperatures were set on 100 degrees C.

A sheet (2 mm thickness) with a density of 22 kg/m³ was produced.

After producing the foam at 10 degrees Celcius via the regular physical extrusion process with isobutane, a 50% reduction in concentration of isobutane was reached after 6 days, as measured by Gas Chromatography.

At a concentration of 50% isobutane the degassing time was 6 days (t_{fdg} = 6 days).

## Claims

1. Polyolefin resin composition comprising
- polyolefin and
- a mixture comprising glycerol ester, primary aliphatic amide and secondary aliphatic amide.

2. A resin composition according to Claim 1 **characterised in that** the glycerol ester is selected from glycerol-mono-ester, glycerol-di-ester and glycerol-tri-ester.

3. A composition according to any one of Claims 1-2 **characterized in that** the primary aliphatic amide is selected from palmitamide and/or stearamide.

4. A composition according to any one of Claims 1-3 **characterized in that** the secondary aliphatic amide is selected from the group consisting of N-substituted palmitamides.

5. A composition according to Claim 4 **characterized in that** the secondary aliphatic amide is oleyl-palmitamide.

6. A composition according to any one of Claims 1-5 **characterized in that** the composition comprises a polyolefin and a mixture comprising glycerol-mono-ester, oleyl-palmitamide and stearamide.

7. A composition according to any one of Claims 1-6 **characterized in that** the composition comprises a polyolefin and a mixture comprising glycerol-mono-stearate, oleyl-palmitamide and stearamide.

8. A composition according to any one of Claims 1-7 **characterized in that** the composition comprises a polyolefin and a mixture comprising glycerol-mono-stearate, glycerol-mono-palmitate, oleyl-palmitamide and stearamide.

9. A composition according to any one of Claims 1-8 **characterized in that** the composition comprises a polyolefin and a mixture comprising glycerol-mono-ester, glycerol-di-ester, glycerol-tri-ester, oleyl-palmitamide and stearamide.

10. A composition according to any one of Claims 1-9 **characterized in that** the composition comprises a polyolefin and a mixture comprising glycerol-mono-stearate, glycerol-mono-palmitate, glycerol-di-stearate, glycerol-di-palmitate, glycerol-tri-stearate, glycerol-tri-palmitate, oleyl-palmitamide and stearamide.

11. A composition according to any one of Claims 1-10 **characterized in that** the polyolefin is low density polyethylene.

12. A polyolefin foam composition obtained by foaming a polyolefin resin composition according to any one of Claims 1-11 in a physical foaming process in the presence of a physical blowing agent.

13. A process for physical foaming of a polyolefin resin composition according to any one of Claims 1-11 in the presence of a blowing agent selected from hydrocarbon gasses such as isobutane, n-butane, iso pentane and n-pentane, LPG and/or a fluorohydrocarbon.

14. An article prepared using the composition according to any one of Claims 1-12 or obtained with the process according to Claim 13.

15. Film, sheet, profile, rod, plank or tube prepared using the composition according to any one of Claims 1-12 or obtained with the process according to Claim 13.
